# EUROPEAN PATENT SPECIFICATION

(11) **EP 4 536 493 B1**
(45) Date of publication and mention of the grant of the patent: **04.03.2026**
(21) Application number: 23739118.0
(22) Date of filing: 30.06.2023
(51) Int. Cl.: B60K 1/02

(54) **IMPROVED CLUTCH BOXES FOR HYBRID TRAIN APPLICATIONS**
VERBESSERTE KUPPLUNGSKÄSTEN FÜR HYBRIDZUGANWENDUNGEN
BOÎTES D'EMBRAYAGE AMÉLIORÉES POUR APPLICATIONS DE TRAIN HYBRIDE

(30) Priority: 30.06.2022 IT 202200013801
(43) Date of publication of application: 16.04.2025
(73) Proprietor: NUOVO PIGNONE TECNOLOGIE - S.R.L., 50127 Florence (IT)
(72) Inventor: BALDANZINI, Fabio, 50127 Florence (IT); BENTZ, Sophie, 50127 Florence (IT); MILANI, Giuliano, 50127 Florence (IT); MARAGIOGLIO, Gaspare, 50127 Florence (IT); PINZAUTI, Alessandro, 50127 Florence (IT); VANNI, Nicola, 50127 Florence (IT)
(74) Representative: Novagraaf Group
(86) International application number: PCT/EP2023/025303
(87) International publication number: WO 2024/002524

(56) References cited:
- WO-A1-2014/102127
- WO-A1-2014/191543
- DE-A1- 102008 043 159
- US-A1- 2003 182 944
- US-A1- 2013 133 480
- US-A1- 2021 341 036

## Description

### TECHNICAL FIELD

The present disclosure concerns an improved clutch box system for hybrid train applications.

### BACKGROUND ART

Gas turbines are often used for providing torque to a load, such as a compressor or the like, for instance in the field of liquid natural gas and in general in the oil and gas industry. The gas turbine is usually connected to the load, as mentioned a compressor, a pump, or any rotary equipment, through a shaft.

More specifically, referring to Liquefied Natural Gas (LNG) processing, LNG is liquefied by a liquefaction process, where the natural gas is cooled using refrigeration cycles so that it becomes liquid to be stored and transported.

For cooling the LNG a refrigerant is cooled by a compressor, then it is condensed and expanded, to remove heat from the natural gas, which flows in a heat exchanger. The compressors are normally driven by gas turbines.

In the last years, an electric machine is also included in the above layout. Configurations where along the shaft line there is a gas turbine a load and an electric machine are usually known and referred to as hybrid train configurations, hybrid train systems, hybrid turbo-compressor trains, or simply hybrid trains. In such configurations, the electric machine can operate as an electric motor, such as a helper, supplying a torque alternatively to the load (e.g., the compressor), for example when the gas turbine cannot operate, or directly to the gas turbine, e.g. during a start-up phase.

The electric machine can also operate as a generator, for instance when excess power is generated by the gas turbine than that normally required by the load. In this case, the power is transformed by the electric machine in the electric energy and injected into a public power grid, for example.

Gas turbines and electric machines have usually different operating speeds and inertia, so transmission torque issues arise in designing hybrid trains.

To face such technical design problems a first solution is that of overdesigning of the shafts that connect the different parts of the hybrid train, namely the gas turbine, the load, and the electric motor. However, this design approach turns out to be expensive. Also between the gas turbine and the electric machine, as well as between the electric machine and the load, there are usually installed clutches, which can be remotely controlled. The clutches allow the decoupling of the different mechanical parts of the hybrid train configurations. Usually, hybrid trains comprise clutches to ease the transmission of the power from the gas turbine (or from the electric machine) to the load. The clutched allows an easier transmission of the torque through the shaft. WO 2014/191543 A1 discloses a gas turbine in a mechanical drive application. DE 10 2008 043159 A1 discloses a device for starting a hybrid vehicle. US 2003/182944 A1 discloses a hughly supercharged gas-turbine generating system.

Finally, as a good design practice, hybrid trains include torque limiting devices (TLDs), installed upstream of each coupling, namely the clutch. A TLD is an automatic device aimed at protecting mechanical parts from possible damage in case of mechanical overload. More specifically, a TLD can limit the torque in several ways. In a first example, TLDs can limit the torque by slipping, as for friction plate slip-clutches, or by decoupling the load, as for the shear pin-type TLD. In this latter case, a mechanical component, namely the shear pin, is sacrificed to disconnect moving and overloaded shafts.

A TLD installed in a coupling needs a suitable landing device, capable of allowing a safe shutdown of the unit in case of TLD intervention. Such coupling with TLD and landing device results much heavier than a normal coupling with consequent rotor-dynamic implications on driver and driven equipment/machine. Consequently, the couplings can be selected as per normal practice (without TLD).

This implies a severe rotor-dynamic limitation on compressor design, due to heavier couplings, and on train operating range. Also, feasibility studies are needed to assess each train shaft line or electrical machine rating torque, to allow the correct operation of the system. In addition, there is a more difficult detection of TLD intervention.

Accordingly, improved torque transmission by clutches would be welcomed in the technology. More in general, it would be desirable to provide torque transmission arrangements that allow a reduction of the complexity and the overall costs of a hybrid train.

### SUMMARY

The invention relates to a torque limiting device intended for use in a hybrid train system and having the features of claim 9.

In another aspect, claim 1 is related to a hybrid train system equipped with the torque limiting system according to claim 9.

A further aspect of the present disclosure is drawn to the fact that the clutch comprises first clutch disc connected to the first transmission shaft, and a second clutch disc, connected to the second transmission shaft. The second transmission shaft may be connected to the load.

In another aspect, the subject matter disclosed herein concerns that the hybrid train system comprises an electric machine and a further transmission assembly, mechanically connecting the electric machine and the load. The electric machine can operate as electric motor and as generator.

Another aspect, the subject matter disclosed herein concerns that the hybrid train system comprises an electric machine. The second transmission shaft is connected to the electric machine. Also, the hybrid train system comprises a further transmission assembly, having an additional clutch box and a first transmission shaft, having an end mechanically connected to the electric machine, and the other end mechanically connected to the clutch box, and a second transmission shaft, having an end mechanically connected to the electric machine, and the other end mechanically connected to the load.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates a schematic of a hybrid train system according to a first embodiment;
Fig. 2 illustrates a longitudinal section of a clutch box according to a first embodiment;
Fig. 3 illustrates a second longitudinal section of a clutch box according to a first embodiment; and
Fig. 4 illustrates a schematic of a hybrid train system according to a second embodiment.

### DETAILED DESCRIPTION OF EMBODIMENTS

Gas turbines are used for driving loads, such as compressors and the like, which are connected to a shaft. Recently, so-called hybrid train systems are spreading in the market, which integrate also electric machine. The torque transmission of a hybrid train system is connected by clutches, to allow a smooth torque transmission between parts having different operating speeds.

According to one aspect, the present subject matter is directed to a clutch box that integrates torque limiting devices, so that they can have both the function of protecting the allowing a safe shutdown of the unit in case of intervention and the function of stabilizer, being them installed in specific positions, instead of the common stabilizing weights of the clutches. Therefore, a TLD within the clutch box, where additional mass is needed to stabilize the shaft between bearings, does not result in rotor-dynamic disadvantages.

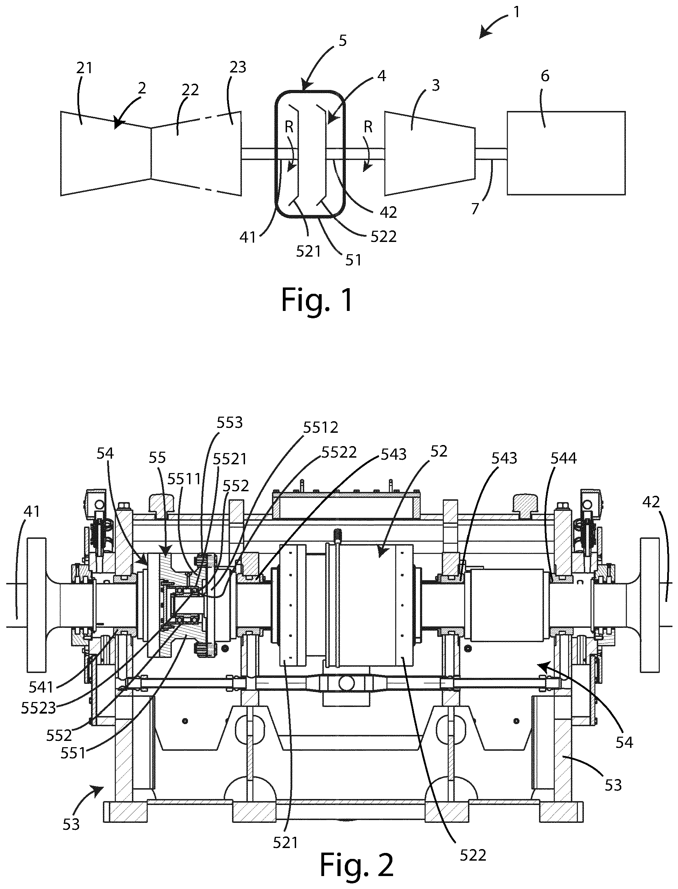

Referring now to the drawings, Fig.1 shows a hybrid train system 1 according to a first embodiment. The hybrid train system 1 comprises a gas turbine 2 and a load 3, to be driven by the gas turbine 2.

The gas turbine 2 comprises a gas compressor 21, capable of compressing air taken from the environment, which is delivered to a combustor 22. In the combustor 22 fuel is added to the airflow and a fuel/air mixture is formed and ignited. The combustion gas generated in the combustor is delivered to the high-pressure turbine 23 and partly expands therein, generating mechanical power. The mechanical power generated by the high-pressure turbine 23 is used to drive the gas-generator compressor 21.

The load 3 is connected to the gas turbine by a transmission assembly 4. Specifically, the main transmission assembly 4 comprises a first transmission shaft 41, having an end connected to the gas turbine 2, a second transmission shaft 42, having an end connected to the load 3, and a clutch box 5. In the illustrated layout of the hybrid train system 1, the clutch box 5 is connected to the first transmission shaft 41 and to the second transmission shaft 42.

In the clutch box 5 there are schematically shown the two clutch discs 521 and 522, respectively mechanically connected to the other ends of the main transmission shaft 41, and of the second transmission shaft 42. The clutch discs 521 and 522 are capable of engaging power transmission. The two clutch discs 521 and 522 are contained in a containment case 51.

The hybrid train system 1 also comprises an electric machine 6, mechanically connected to the load 3 by a shaft 7, which in the case at issue comprises only a second shaft. The electric machine 6 can operate either as an electric motor, thus providing torque to the load 3, or as a generator, thus transforming the torque received through the shaft 7.

In the embodiment shown, the load is a compressor, however, in other embodiment, the load can be a different one, such as a pump, and the like.

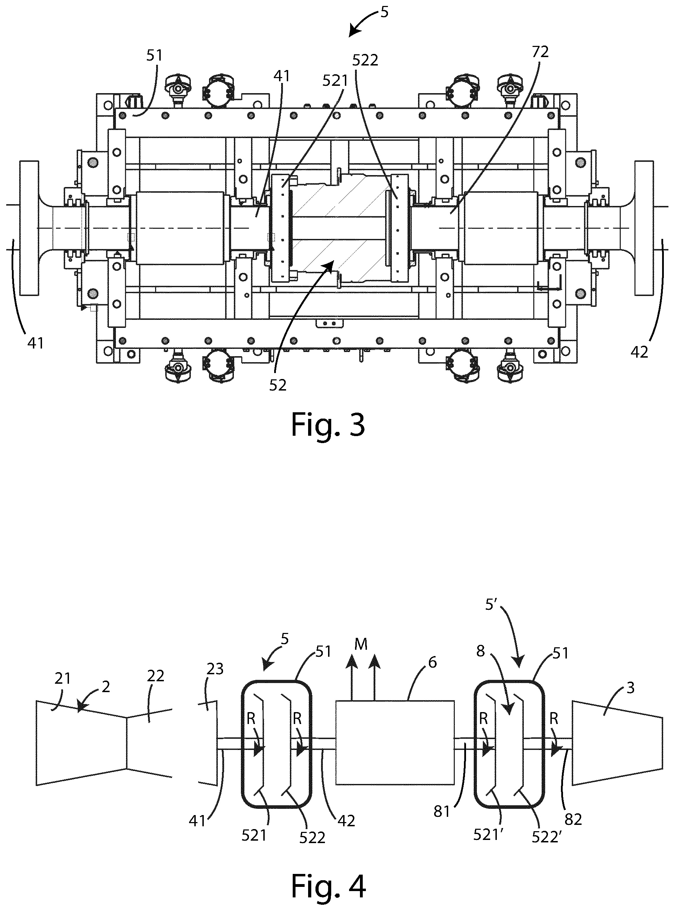

Referring now to Figs. 2 and 3, there are shown longitudinal sections of the clutch box 5 that is illustrated in more detail. In particular, it is possible to see that the clutch box 5 comprises a supporting structure 53, to support the overall clutch box 5 itself, as well as the weight of the first transmission shaft 41 and the second transmission shaft 42 connected to the clutch box 5. The clutch box 5 also comprises the clutch 52, which, as already mentioned above, comprises the two clutch discs 521 and 522, respectively connected to the first transmission shaft 41, and to the second transmission shaft 42. The clutch 52 has the function to decouple the power transmission between the first transmission shaft 41 and the second transmission shaft 42, so as to mechanically disconnect the gas turbine 2 from the clutch 52.

The clutch box 5 also comprises, a plurality of combined thrust bearings 54, arranged within the containment casing 51. Specifically, in the embodiment at issue, the combined thrust bearings 54 are four. The combined thrust bearings 541 and 542 are fixed to the supporting structure 53 and connected to the first transmission shaft 41; the other two combined thrust bearings 543 and 544 are fixed to the supporting structure 53 and connected to the second transmission shaft 42.

The clutch box 5 also comprises torque limiting device 55, connected between the first transmission shaft 41 and the clutch disc 521 of the clutch 52. The torque limiting device 55 comprises a body 551, two journal bearing 552, each one having an outer ring 5521 and an inner ring 5522, facing each other, and a plurality of spheres 5523 rolling between them.

The body 551 has a collar 5511, connected to the journal bearings 552, so as to rotate with it, and a sprocket 5512 is connected to the clutch discs 521. The collar 5511 and the sprocket 5512 face each other and are connected by one or more shear pins 553. In this way, the shear pin 553 connects two rotating members, namely the collar 5511 and the sprocket 5512 and it is subject to shear force when torque is transmitted. It is seen that the torque limiting device 55 is completely contained in the clutch box 5.

The introduction of the torque limiter device 55 allows for avoiding a shaft line overdesign, which might limit the hybrid train system 1 operating range. In fact, the mass of torque limiter device 55 stabilizes the main shaft assembly 4 between the combined thrust bearings 543 and 544, thus preventing rotor-dynamic disadvantages. The mass of the torque limiter device 55 replaces the usual masses applied to the shafts for their stabilization.

Specifically, in a clutch box 5, the radial bearings are only supporting the weight of the rotors. These bearings are all hydrodynamic sleeve bearings with a single combined thrust face and they need to operate loaded to stabilize. Therefore the bearing stiffness and damping coefficients are highly impacted by the loads. The best practice to ensure the bearings provides a minimal specific pressure and, to stabilize it, masses are usually added between the two bearings of each shaft. Moreover, a high exceptional torque leads to shafts with a larger minimum cross-sectional diameter than if the torque is limited by a torque limiting device 55. The diameter of the bearings 541, 542, 543, and 544 is therefore directly related to the pick torque. The larger the diameter of a bearing, the lower the specific pressure of the bearings. Therefore, there is a strong interest in limiting the exceptional torque in order to guarantee the stability of the bearings by loading them sufficiently.

In other embodiments, other types of torque limiting devices can be installed, such as torque clocker types, and the like.

The hybrid train system 1 according to the first embodiment described above operates as follows.

When the gas turbine 2 operates, the torque can be transmitted by the clutch box 5 to the load 3, which is a compressor. The two clutch discs 521 and 522 of the clutch can be separated, thus not transmitting the torque, to the load 3. When the clutch discs 521 and 522 are connected, torque can be transmitted, from the gas turbine 2 to the load 3, and the shear pins 553 experience a shear force. The first transmission shaft 41 and the second transmission shaft 42 then rotate according, for instance, to the rotation arrow R (see Fig. 1).

When the transmitted torque causes a force that exceeds the pins' shear strength, namely a certain shear strength, which can be preset by proper design, the shear pins 553 break, and the gas turbine 2 and the load 3 are mechanically de-coupled.

Referring now to Fig. 4, a second embodiment of a hybrid train system 1' is illustrated. In this case, a different layout is shown, having two clutch boxes 5, as better explained below.

The hybrid train system 1' comprises the gas turbine 2, and the electric motor 6, connected by the first clutch box 5, analogous the clutch box of the first embodiment. The two clutch discs 521 and 522 of the clutch 52 are connected respectively to first transmission shaft 41 and to the second transmission shaft 42.

The load 3 is connected to the electric machine 6 by a transmission assembly 8 having a clutch box 5, analogous to the clutch box of the first embodiment of hybrid train system 1 described above.

The further transmission assembly 8 comprises a first transmission shaft 81 and a second transmission shaft 82, and a clutch box 52. The two clutch discs 521 and 522 of the clutch 52 of the second clutch box 5' provided in the further transmission assembly 8 are connected respectively to first transmission shaft 81 and to the second transmission shaft 82.

In the hybrid train system 1' the electric machine 6 can operate either as a helper, providing torque to load 3, or as a generator, transforming the exceeding power generated by the gas turbine 2, and not required by the load 3, in electric energy, for example, to be injected into the power grid G, to which the electric machine 6 can be connected.

In the hybrid train system 1', both the first 5 and the second 5' clutch boxes can break, according to the same mechanism disclosed for the hybrid train system 1 according to the first embodiment, in case of the gas turbine 2 or the electric machine 6, or both, generate an excess torque on the transmission assemblies 4 and 8.

Therefore, when the transmitted torque causes a force that exceeds the pins' shear strength, namely a certain shear strength, which can be preset by proper design, the shear pins 553 break, and the gas turbine 2 or the load 3 are mechanically decoupled.

An advantage of implementing a torque limiter device is that of allowing avoiding a shaft line overdesign, which might jeopardize the feasibility of the project or limit the turbo-compressor train operating range. Also, the shaft line is standardized irrespectively by the mechanical and electrical parameters of the electrical machine, i.e., irrespectively by the manufacturer. Standardized train shaft line with such features, developed for a brownfield solution, can be then easily replicated in a greenfield one.

Another advantage of the present disclosure is the rotor-dynamic benefits on both electrical machine and compressor design. Also, an enhanced operational mode spectrum (including "booster mode") is available.

An additional advantage of the disclosure is that the clutch box can be used for brown and greenfield solution. Also, the shaft line can be easily validated without a detailed feasibility study.

It is also an advantage of the disclosure is obtaining a Shaft Line Integration standardized irrespectively by the electrical machine manufacturer, so as to get commercial benefits.

While aspects of the invention have been described in terms of various specific embodiments, it will be apparent to those of ordinary skill in the art that many modifications, changes, and omissions are possible without departing from the spirit and scope of the claims. In addition, unless specified otherwise herein, the order or sequence of any process or method steps may be varied or re-sequenced according to alternative embodiments.

Reference has been made in detail to embodiments of the disclosure, one or more examples of which are illustrated in the drawings. Each example is provided by way of explanation of the disclosure, not limitation of the disclosure. In fact, it will be apparent to those skilled in the art that various modifications and variations can be made in the present disclosure without departing from the scope or spirit of the disclosure. Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures, or characteristics may be combined in any suitable manner in one or more embodiments.

When elements of various embodiments are introduced, the articles "a", "an", "the", and "said" are intended to mean that there are one or more of the elements. The terms "comprising", "including", and "having" are intended to be inclusive and mean that there may be additional elements other than the listed elements.

## Claims

1. A hybrid train system, comprising:
a load (3), to be driven by a torque,
a gas turbine (2) for generating the driving torque to drive the load (3); and
a main transmission assembly (4), and further comprising
a clutch box (5), comprising a containment case (51), and a clutch (52), arranged within the containment case (51);
a first transmission shaft (41), having an end mechanically connected to the gas turbine (2), and the other end mechanically connected to the clutch box (5); and
a second transmission shaft (42), having an end mechanically connected to the clutch box (5);
wherein the clutch box (5) comprises a torque limiting device (55) arranged within the containment case (51),
wherein the torque limiting device (55) is connected between the clutch (52) and the first transmission shaft (41) and/or the second transmission shaft (42), and
wherein in case of the torque transmitted to the clutch (52) exceeds a threshold, the torque limiting device (55) mechanically decouples the clutch (52) from the first transmission shaft (41) and/or the second transmission shaft (42).

2. The hybrid train system of claim 1, wherein the torque limiting device (55) comprises
a body (551),
a collar (5511), rotatably connected to the first transmission shaft (41),
a sprocket (5512), rotatably connected to the clutch (52), and arranged facing the collar (5511), and
one or more shear pins (553), connecting the collar (5511) and the sprocket (5512), so as to be subject to a shear force when torque is transmitted from the collar (5511) to the sprocket (5512),
wherein in case the transmitted torque causes a force that exceeds the shear strength threshold of the shear pins (553), the shear pins (553) break to mechanically de-couple the gas turbine (2).

3. The hybrid train system of claim 1, wherein the clutch (52) comprises first clutch disc (521) connected to the first transmission shaft (41), and a second clutch disc (522), connected to the second transmission shaft (3).

4. The hybrid train system of claim 2,
wherein the collar (5511) is connected to the first transmission shaft (41) by a journal bearing (552) and
wherein the sprocket (5512) is connected to the second shaft (42) by a journal bearing (552).

5. The hybrid train system of claim 3, wherein the other end of the second transmission shaft (42) is connected to the load (3).

6. The hybrid train system of claim 1, comprising an electric machine (6) and a further transmission assembly (7), mechanically connecting the electric machine (6) and the load (3), wherein the electric machine (6) is configured to operate as electric motor, to transmit torque to the load (3), and as generator, receive torque from the load (3).

7. The hybrid train system of claim 3,
comprising an electric machine (6),
wherein the second transmission shaft (42) is connected to the electric machine (6), and
wherein the hybrid train system comprises a further transmission assembly (8), having
an additional clutch box (51) and
a first transmission shaft (81), having an end mechanically connected to the electric machine (6), and the other end mechanically connected to the clutch box (51), and
a second transmission shaft (82), having an end mechanically connected to the electric machine (6), and the other end mechanically connected to the load (3).

8. The hybrid train system of claim 1, wherein the load (3) is a compressor or a pump.

9. A clutch box (5) for a hybrid train system,
said hybrid system train system comprising a load (3) to be driven by a torque, a gas turbine (2) for generating the driving torque to drive the load (3), and a main transmission assembly (4),
a first transmission shaft (41) having an end connected to the gas turbine (2) and the other end mechanically to be connected to the clutch box (5) and a second transmission shaft (42) to be mechanically connected to the clutch box (5),
said clutch box comprising:
a containment case (51); and
a clutch (52), arranged within the containment case (51);
wherein the clutch box (5) comprises a torque limiting device (55) arranged within the containment case (51),
wherein the torque limiting device (55) can be connected between the first transmission shaft (41) and the clutch (52), and
wherein in case of the torque transmitted to the clutch (52) exceeds a threshold, the torque limiting device (55) mechanically decouples the clutch (52) from the first transmission shaft (41).

10. The clutch box of the preceding claim, wherein the torque limiting device (55) comprises
a body (551),
a collar (5511), rotatably connectable to a first transmission shaft (41),
a sprocket (5512), rotatably connected to the clutch (52), and arranged facing the collar (5511), and
one or more shear pins (553), connecting the collar (5511) and the sprocket (5512), so as to be subject to a shear force when torque is transmitted from the collar (5511) to the sprocket (5512),
wherein in case the transmitted torque causes a force that exceeds the shear strength threshold of the shear pins (553), the shear pins (553) break to mechanically de-couple the clutch (52).

11. The clutch box of claim 10,
wherein the collar (5511) is connectable to a first transmission shaft (41) by a journal bearing (552), and
wherein the sprocket (5512) is connectable to a second shaft (42) by a journal bearing (552).

## Patentansprüche

1. Hybridzugsystem, umfassend:
eine Last (3), die durch ein Drehmoment anzutreiben ist,
eine Gasturbine (2) zum Erzeugen des Antriebsdrehmoments, um die Last (3) anzutreiben; und
eine Hauptgetriebeanordnung (4), und ferner umfassend
eine Kupplungsbox (5), umfassend ein Aufnahmegehäuse (51) und eine Kupplung (52), die innerhalb des Aufnahmegehäuses (51) eingerichtet ist;
eine erste Getriebewelle (41), die ein Ende aufweist, das mit der Gasturbine (2) mechanisch verbunden ist, und wobei das andere Ende mit der Kupplungsbox (5) mechanisch verbunden ist; und
eine zweite Getriebewelle (42), die ein Ende aufweist, das mit der Kupplungsbox (5) mechanisch verbunden ist;
wobei die Kupplungsbox (5) eine Drehmomentbegrenzungsvorrichtung (55) umfasst, die innerhalb des Aufnahmegehäuses (51) eingerichtet ist,
wobei die Drehmomentbegrenzungsvorrichtung (55) zwischen der Kupplung (52) und der ersten Getriebewelle (41) und/oder der zweiten Getriebewelle (42) verbunden ist und
wobei in einem Fall, dass das Drehmoment, das an die Kupplung (52) übertragen wird, eine Schwelle überschreitet, die Drehmomentbegrenzungsvorrichtung (55) die Kupplung (52) von der ersten Getriebewelle (41) und/oder der zweiten Getriebewelle (42) mechanisch entkoppelt.

2. Hybridzugsystem nach Anspruch 1, wobei die Drehmomentbegrenzungsvorrichtung (55) umfasst
einen Körper (551),
einen Bund (5511), der mit der ersten Getriebewelle (41) drehbar verbunden ist,
ein Kettenrad (5512), das mit der Kupplung (52) drehbar verbunden und dem Bund (5511) zugewandt eingerichtet ist und
einen oder mehrere Scherstifte (553), die den Bund (5511) und das Kettenrad (5512) verbinden, um einer Scherkraft ausgesetzt zu werden, wenn das Drehmoment von dem Bund (5511) zu dem Kettenrad (5512) übertragen wird,
wobei in einem Fall, dass das übertragene Drehmoment eine Kraft verursacht, die die Scherfestigkeitsschwelle der Scherstifte (553) überschreitet, die Scherstifte (553) brechen, um die Gasturbine (2) mechanisch zu entkoppeln.

3. Hybridzugsystem nach Anspruch 1, wobei die Kupplung (52) eine erste Kupplungsscheibe (521), die mit der ersten Getriebewelle (41) verbunden ist, und eine zweite Kupplungsscheibe (522) umfasst, die mit der zweiten Getriebewelle (3) verbunden ist.

4. Hybridzugsystem nach Anspruch 2,
wobei der Bund (5511) mit der ersten Getriebewelle (41) durch ein Radiallager (552) verbunden ist und
wobei das Kettenrad (5512) mit der zweiten Welle (42) durch ein Radiallager (552) verbunden ist.

5. Hybridzugsystem nach Anspruch 3, wobei das andere Ende der zweiten Getriebewelle (42) mit der Last (3) verbunden ist.

6. Hybridzugsystem nach Anspruch 1, umfassend eine elektrische Maschine (6) und eine weitere Getriebeanordnung (7), die die elektrische Maschine (6) und die Last (3) mechanisch verbindet, wobei die elektrische Maschine (6) konfiguriert ist, um als elektrischen Motor betrieben zu werden, um Drehmoment an die Last (3) zu übertragen, und als Generator, um Drehmoment von der Last (3) zu empfangen.

7. Hybridzugsystem nach Anspruch 3,
umfassend eine elektrische Maschine (6),
wobei die zweite Getriebewelle (42) mit der elektrischen Maschine (6) verbunden ist und
wobei das Hybridzugsystem eine weitere Getriebeanordnung (8) umfasst, die eine zusätzliche Kupplungsbox (51) aufweist und
eine erste Getriebewelle (81), die ein Ende aufweist, das mit der elektrischen Maschine (6) mechanisch verbunden ist, und wobei das andere Ende mit dem Kupplungskasten (51) mechanisch verbunden ist und
eine zweite Getriebewelle (82), die ein Ende aufweist, das mit der elektrischen Maschine (6) mechanisch verbunden ist, und wobei das andere Ende mit der Last (3) mechanisch verbunden ist.

8. Hybridzugsystem nach Anspruch 1, wobei die Last (3) ein Kompressor oder eine Pumpe ist.

9. Kupplungsbox (5) für ein Hybridzugsystem, das Hybridsystemzugsystem umfassend eine Last (3), die durch ein Drehmoment anzutreiben ist, eine Gasturbine (2) zum Erzeugen des Antriebsdrehmoments, um die Last (3) anzutreiben, und eine Hauptgetriebeanordnung (4), eine erste Getriebewelle (41), die ein Ende aufweist, das mit der Gasturbine (2) verbunden ist und wobei das andere Ende mit der Kupplungsbox (5) mechanisch zu verbinden ist, und eine zweite Getriebewelle (42), die mit der Kupplungsbox (5) mechanisch zu verbinden ist, die Kupplungsbox umfassend:
ein Aufnahmegehäuse (51); und
eine Kupplung (52), die innerhalb des Aufnahmegehäuses (51) eingerichtet ist;
wobei die Kupplungsbox (5) eine Drehmomentbegrenzungsvorrichtung (55) umfasst, die innerhalb des Aufnahmegehäuses (51) eingerichtet ist,
wobei die Drehmomentbegrenzungsvorrichtung (55) zwischen der ersten Getriebewelle (41) und der Kupplung (52) verbunden werden kann und
wobei in einem Fall, dass das Drehmoment, das an die Kupplung (52) übertragen wird, eine Schwelle überschreitet, die Drehmomentbegrenzungsvorrichtung (55) die Kupplung (52) von der ersten Getriebewelle (41) mechanisch entkoppelt.

10. Kupplungsbox nach dem vorstehenden Anspruch, wobei die Drehmomentbegrenzungsvorrichtung (55) umfasst
einen Körper (551),
einen Bund (5511), der mit einer ersten Getriebewelle (41) drehbar verbindbar ist,
ein Kettenrad (5512), das mit der Kupplung (52) drehbar verbunden und dem Bund (5511) zugewandt eingerichtet ist und
einen oder mehrere Scherstifte (553), die den Bund (5511) und das Kettenrad (5512) verbinden, um einer Scherkraft ausgesetzt zu werden, wenn das Drehmoment von dem Bund (5511) zu dem Kettenrad (5512) übertragen wird,
wobei in einem Fall, dass das übertragene Drehmoment eine Kraft verursacht, die die Scherfestigkeitsschwelle der Scherstifte (553) überschreitet, die Scherstifte (553) brechen, um die Kupplung (52) mechanisch zu entkoppeln.

11. Kupplungsbox nach Anspruch 10,
wobei der Bund (5511) mit einer ersten Getriebewelle (41) durch ein Radiallager (552) verbindbar ist und
wobei das Kettenrad (5512) mit einer zweiten Welle (42) durch ein Radiallager (552) verbindbar ist.

## Revendications

1. Système de train hybride, comprenant :
une charge (3), destinée à être entraînée par un couple,
une turbine à gaz (2) pour générer le couple d'entraînement pour entraîner la charge (3) ; et
un ensemble de transmission principal (4), et comprenant en outre
un coffre d'embrayage (5), comprenant un carter de confinement (51), et un embrayage (52), agencé au sein du carter de confinement (51) ;
un premier arbre de transmission (41), ayant une extrémité reliée mécaniquement à la turbine à gaz (2), et l'autre extrémité reliée mécaniquement au coffre d'embrayage (5) ; et
un second arbre de transmission (42), ayant une extrémité reliée mécaniquement au coffre d'embrayage (5) ;
dans lequel le coffre d'embrayage (5) comprend un dispositif de limitation de couple (55) agencé au sein du carter de confinement (51),
dans lequel le dispositif de limitation de couple (55) est relié entre l'embrayage (52) et le premier arbre de transmission (41) et/ou le second arbre de transmission (42), et
dans lequel, dans le cas où le couple transmis à l'embrayage (52) dépasse un seuil, le dispositif de limitation de couple (55) désaccouple mécaniquement l'embrayage (52) du premier arbre de transmission (41) et/ou du second arbre de transmission (42).

2. Système de train hybride selon la revendication 1, dans lequel le dispositif de limitation de couple (55) comprend
un corps (551),
un collier (5511), relié de manière rotative au premier arbre de transmission (41),
un pignon (5512), relié de manière rotative à l'embrayage (52), et agencé faisant face vers le collier (5511), et
une ou plusieurs goupilles de cisaillement (553), reliant le collier (5511) et le pignon (5512), de manière à être soumises à une force de cisaillement lorsque le couple est transmis du collier (5511) au pignon (5512),
dans lequel dans le cas où le couple transmis provoque une force qui dépasse le seuil de résistance au cisaillement des goupilles de cisaillement (553), les goupilles de cisaillement (553) se brisent pour désaccoupler mécaniquement la turbine à gaz (2).

3. Système de train hybride selon la revendication 1, dans lequel l'embrayage (52) comprend un premier disque d'embrayage (521) relié au premier arbre de transmission (41), et un second disque d'embrayage (522), relié au second arbre de transmission (3).

4. Système de train hybride selon la revendication 2,
dans lequel le collier (5511) est relié au premier arbre de transmission (41) par un palier lisse (552), et
dans lequel le pignon (5512) est relié au second arbre (42) par un palier lisse (552).

5. Système de train hybride selon la revendication 3, dans lequel l'autre extrémité du second arbre de transmission (42) est reliée à la charge (3).

6. Système de train hybride selon la revendication 1, comprenant une machine électrique (6) et un autre ensemble de transmission (7), reliant mécaniquement la machine électrique (6) et la charge (3), dans lequel la machine électrique (6) est conçue pour fonctionner en tant que moteur électrique, pour transmettre un couple à la charge (3), et en tant que générateur, recevoir un couple de la charge (3).

7. Système de train hybride selon la revendication 3,
comprenant une machine électrique (6),
dans lequel le second arbre de transmission (42) est relié à la machine électrique (6), et
dans lequel le système de train hybride comprend un autre ensemble de transmission (8), ayant un coffre d'embrayage supplémentaire (51) et
un premier arbre de transmission (81), ayant une extrémité reliée mécaniquement à la machine électrique (6), et l'autre extrémité reliée mécaniquement au coffre d'embrayage (51), et
un second arbre de transmission (82), ayant une extrémité reliée mécaniquement à la machine électrique (6), et l'autre extrémité reliée mécaniquement à la charge (3).

8. Système de train hybride selon la revendication 1, dans lequel la charge (3) est un compresseur ou une pompe.

9. Coffre d'embrayage (5) pour un système de train hybride, ledit système de train à système hybride comprenant une charge (3) destinée à être entraînée par un couple, une turbine à gaz (2) pour générer le couple d'entraînement pour entraîner la charge (3), et un ensemble de transmission principal (4), un premier arbre de transmission (41) ayant une extrémité reliée à la turbine à gaz (2) et l'autre extrémité devant être reliée mécaniquement au coffre d'embrayage (5) et un second arbre de transmission (42) devant être relié mécaniquement au coffre d'embrayage (5), ledit coffre d'embrayage comprenant :
un carter de confinement (51) ; et
un embrayage (52), agencé au sein du carter de confinement (51) ;
dans lequel le coffre d'embrayage (5) comprend un dispositif de limitation de couple (55) agencé au sein du carter de confinement (51),
dans lequel le dispositif de limitation de couple (55) peut être relié entre le premier arbre de transmission (41) et l'embrayage (52), et
dans lequel, dans le cas où le couple transmis à l'embrayage (52) dépasse un seuil, le dispositif de limitation de couple (55) désaccouple mécaniquement l'embrayage (52) du premier arbre de transmission (41).

10. Coffre d'embrayage selon la revendication précédente, dans lequel le dispositif de limitation de couple (55) comprend
un corps (551),
un collier (5511), pouvant être relié de manière rotative à un premier arbre de transmission (41),
un pignon (5512), relié de manière rotative à l'embrayage (52), et agencé faisant face vers le collier (5511), et
une ou plusieurs goupilles de cisaillement (553), reliant le collier (5511) et le pignon (5512), de manière à être soumises à une force de cisaillement lorsque le couple est transmis du collier (5511) au pignon (5512),
dans lequel, dans le cas où le couple transmis provoque une force qui dépasse le seuil de résistance au cisaillement des goupilles de cisaillement (553), les goupilles de cisaillement (553) se brisent pour désaccoupler mécaniquement l'embrayage (52).

11. Coffre d'embrayage selon la revendication 10,
dans lequel le collier (5511) peut être relié à un premier arbre de transmission (41) par un palier lisse (552), et
dans lequel le pignon (5512) peut être relié à un second arbre (42) par un palier lisse (552).
